# EUROPEAN PATENT APPLICATION

(11) **EP 4 769 079 A1**
(43) Date of publication of application: **01.07.2026**
(21) Application number: 25225459.4
(22) Date of filing: 19.12.2025
(51) Int. Cl.: G06F 3/01, G06Q 10/02, G06Q 30/0601

(54) **INFORMATION PROCESSING DEVICE, CONTROL METHOD, COMPUTER PROGRAM, AND COMPUTER READABLE MEDIUM**

(30) Priority: 24.12.2024 JP 2024227972
(71) Applicant: Canon Kabushiki Kaisha, Tokyo, 146-8501 (JP)
(72) Inventor: WATANABE, Kentaro, Ohta-ku, Tokyo 146-8501 (JP); FUKAI, Yosuke, Ohta-ku, Tokyo 146-8501 (JP); KAWAI, Kenji, Ohta-ku, Tokyo 146-8501 (JP); KATAOKA, Misako, Ohta-ku, Tokyo 146-8501 (JP); USUI, Toshiya, Ohta-ku, Tokyo 146-8501 (JP)
(74) Representative: TBK

(57) **Abstract**

An information processing device includes selection means configured to select at least two VR contents from a plurality of VR contents in response to an operation from a user, and display control means configured to control display means so as to display an image of a VR space in which the at least two VR contents selected by the selection means are arranged side by side, wherein in a first case where a first VR content and a second VR content are selected by the selection means, the display control means controls the display means so as to display an image of the VR space in which a first region for displaying the first VR content and a second region for displaying the second VR content are arranged side by side.

## Description

### TECHNICAL FIELD

The present disclosure relates to an information processing device, a control method, a computer program, and a computer readable medium.

### BACKGROUND

When making a reservation for a hotel or the like, a user searches for hotel plans via the Internet and reserves a desired plan. At this time, the user reserves the desired plan by referring to two-dimensional information (text information and a two-dimensional image) displayed on a terminal such as a personal computer or a smartphone.

When displaying an image such as an interior view of a hotel room as wide as possible on a terminal such as a personal computer or a smartphone, a wide-angle shot is necessary. Since an image captured by a wide-angle shot differs in perspective and other aspects from the actual appearance of a room, it is difficult for the user to grasp the actual state of the room.

In contrast, a three-dimensional image allows the user to acquire information such as the actual sense of depth of a room, which cannot be easily. obtained from two-dimensional information. However, the user who wants to compare a plurality of three-dimensional images has to perform a complicated operation. For example, such a user has to stop playing back an image that is being viewed, then has to return the screen to a full screen for selecting another image, and reselect an image that the user wants to view. Japanese Patent Laid-Open No. 2020-120411 indicates a method for presenting an additional content in the virtual reality environment of a head-mounted display without interfering with the visibility of a main content.

### SUMMARY

In Japanese Patent Laid-Open No. 2020-120411, the control circuit displays a main content in the foreground area of the user's field of view and displays an additional content in the peripheral area of the foreground area. However, the display method of Japanese Patent Laid-Open No. 2020-120411 is not suitable for comparison between main contents.

The present disclosure provides a technique for implementing display suitable for comparison among a plurality of three-dimensional images for a user.

The present disclosure in its first aspect provides an information processing device as specified in claim 1. Optional features are specified in claim 2 to 12. The present disclosure in its second aspect provides a control method as specified in claim 13. The present disclosure in its third aspect provides a computer program as specified in claim 14. The present disclosure in its third aspect provides a computer readable medium as specified in claim 15.

According to the present disclosure, a technique can be provided for implementing display suitable for comparison among a plurality of three-dimensional images for a user.

Features of the present disclosure will become apparent from the following description of embodiments with reference to the attached drawings. The following description of embodiments is described by way of example.

### BRIEF DESCRIPTION OF THE DRAWINGS

FIG. 1 is an overall configuration diagram of a reservation system.
FIGS. 2A and 2B show the display of a user terminal according to a first embodiment.
FIG. 3 is a flowchart showing the operations of a reservation management system according to the first embodiment.
FIGS. 4A and 4B show a state in which a VR image is displayed according to the first embodiment.
FIG. 5 shows a non-VR image displayed on the user terminal according to the first embodiment.
FIGS. 6A and 6B show a state in which a VR image is displayed according to the first embodiment.
FIGS. 7A and 7B show a state in which a VR image is displayed on the user terminal according to the first embodiment.
FIGS. 8A and 8B show a state in which a VR image is displayed on the user terminal according to the first embodiment.
FIG. 9 is a schematic diagram of a VR space viewed in the vertical direction according to the first embodiment.
FIG. 10 is a schematic diagram of a stereo camera for capturing a 3D 180-degree image.
FIG. 11 is a schematic diagram of a VR space viewed in the vertical direction according to a second embodiment.
FIG. 12 is a schematic diagram of a VR space viewed in the vertical direction according to the second embodiment.
FIGS. 13A and 13B are explanatory drawings of perspective conflict according to the second embodiment.
FIG. 14 is an explanatory drawing of a non-display region according to the second embodiment.
FIGS. 15A and 15B are schematic diagrams of a VR space viewed in the vertical direction according to the second embodiment.
FIGS. 16A and 16B show a state in which a VR image is displayed according to a third embodiment.
FIGS. 17A and 17B are schematic diagrams of a VR space viewed in the vertical direction according to the third embodiment.
FIGS. 18A and 18B show a state in which a VR image is displayed according to the third embodiment.

### DESCRIPTION OF THE EMBODIMENTS

### First Embodiment

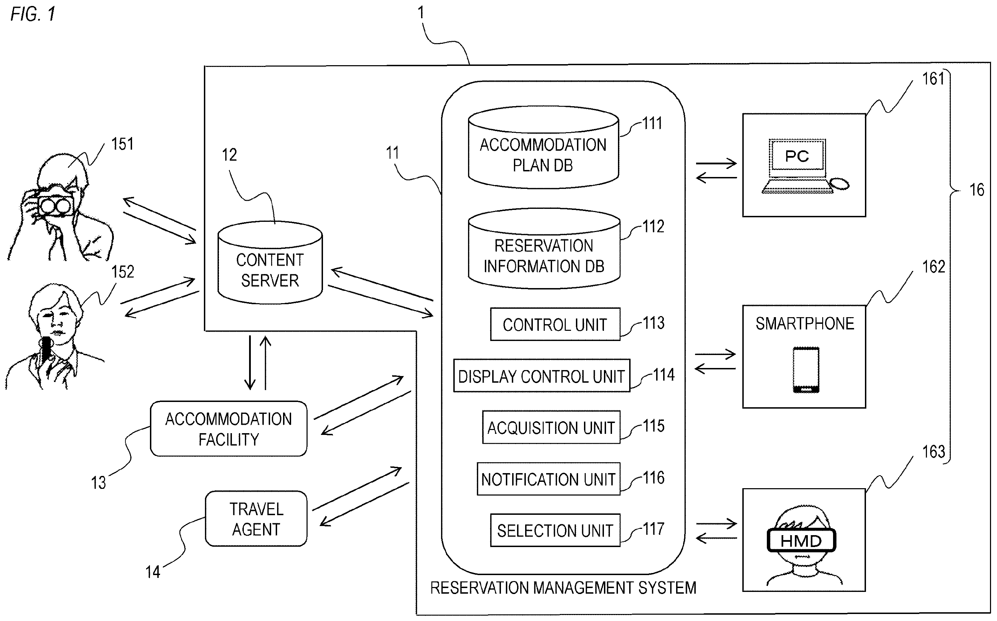

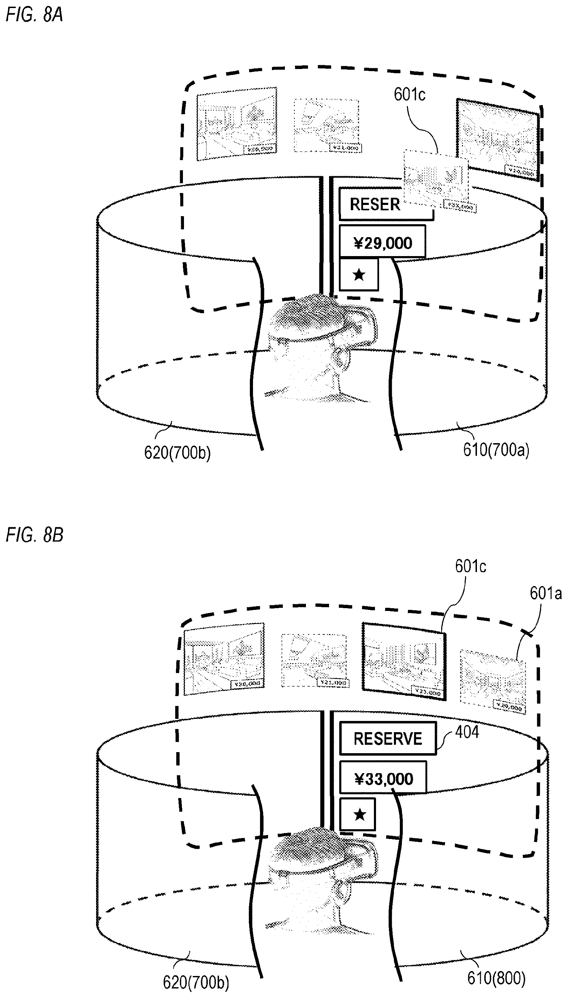

Referring to FIGS. 1 to 8B, a first embodiment will be described below. FIG. 1 is an overall configuration diagram of a reservation system 1 using an information processor according to the first embodiment. The reservation system 1 includes a reservation management system 11, a content server 12, and a user terminal 16.

In the first embodiment, the reservation management system 11 is used for a user to reserve an accommodation plan. The reservation management system 11 acquires, from the content server 12, images (VR images) of service contents such as interior views of rooms, facilities of accommodations, and meals in a VR (Virtual Reality) space. The reservation management system 11 transmits the selected plan and the VR image associated with the plan to the user terminal 16 in response to a selection operation that is a user operation on the user terminal 16.

The reservation management system 11 includes an accommodation plan database (DB) 111, a reservation information database (DB) 112, a control unit 113, a display control unit 114, an acquisition unit 115, a notification unit 116, and a selection unit 117.

The accommodation plan DB 111 is a database including a storage unit such as a storage medium. The storage unit stores, for example, information on accommodation plans to be presented to the user. The accommodation plan DB 111 contains, for the respective accommodation plans, vacancy information on accommodations (information on whether the plan can be booked or not), price information, information on interior views of rooms and facilities of accommodations, and information on the service contents such as meals. Various kinds of information stored in the accommodation plan DB 111 may include a two-dimensional image or the like. Various kinds of information stored in the accommodation plan DB 111 are stored by an accommodation facility 13 and a travel agent 14. The reservation management system 11 transmits information on a reservable plan from the accommodation plan DB 111 to the user terminal 16 in response to a user operation on the user terminal 16.

The reservation information DB 112 is a database including a storage unit such as a storage medium. The storage unit is used to store, for example, reservation information on a selected plan in response to a reservation operation that is a user operation on the user terminal 16. The reservation information includes personal information (contact information) on a user who has reserved a plan, information on the plan reserved by the user (referred to as "plan information"), and information on a peripheral area relating to the accommodation plan reserved by the user (referred to as "surrounding information").

The plan information includes pieces of information such as an accommodation facility reserved by the user, a room, a date, a period, the price of the reserved plan, and the service contents (such as food) of the reserved plan. The pieces of information included in the plan information are associated with multiple VR images or non-VR images related to the respective pieces of information.

The surrounding information includes pieces of information such as tourist information on the vicinity of an accommodation facility, information on a route to the accommodation facility, and information on the method of transport to the accommodation facility. The pieces of information included in the surrounding information are not directly related to the accommodation plan but are useful to the user. One or more related images (VR images or non-VR images) are associated with the respective pieces of information.

The control unit 113 controls the overall reservation management system 11. The control unit 113 stores reservation information in the reservation information DB 112 in response to a user operation on the user terminal 16. The control unit 113 also determines contents to be displayed on the user terminal 16 and performs user authentication or the like. The control unit 113 acquires information on the type of the terminal (terminal type information) from the user terminal 16 to determine the type of the user terminal 16 on the basis of the terminal type information. The type of the terminal is a type corresponding to the terminal, for example, an HMD, a smartphone, or a PC.

The display control unit 114 displays a VR image (VR content) or a non-VR image (non-VR content) or the like on the user terminal 16 in response to a user operation on the user terminal 16. The display control unit 114 transmits a VR image or a non-VR image or the like from the accommodation plan DB 111 or the content server 12 to the user terminal 16. The display control unit 114 may control the user terminal 16 to display a non-VR image superimposed on a VR image.

The acquisition unit 115 acquires a VR image or a non-VR image or the like in response to a user operation on the user terminal 16. For example, the acquisition unit 115 acquires a VR image or a non-VR image or the like from the accommodation plan DB 111 and the content server 12.

The notification unit 116 provides a notification of, for example, the confirmation of reservation to a user's contact address registered by the user and the accommodation facility 13 (or the travel agent 14) by e-mail or the like. After the reservation operation, the notification unit 116 may provide a notification to encourage the user to store the VR image in the content server 12 on the basis of the reservation information.

The selection unit 117 accepts a user operation in comparative display processing to be described later. Furthermore, in the comparative display processing, the selection unit 117 selects at least two VR images from a plurality of VR images in response to a user operation. However, the VR image selected by the selection unit 117 is not limited to an image corresponding to a user operation. For example, the selection unit 117 automatically selects a plan relating to the user on the basis of the plan selection history of the user, the plan information, or the surrounding information. In addition, the selection unit 117 may instruct the acquisition unit 115 to acquire a VR image corresponding to the selected plan.

The content server 12 is a server including a storage unit such as a storage medium. In the storage unit, information on the room interior views and facilities of accommodations and service contents such as meals is stored. Various kinds of information stored in the content server 12 may include non-VR images and 3D stereo images. The 3D stereo images are stereoscopic images including an image stored as a three-dimensional image and a 180-degree image (3D 180-degree image) and an image stored as a three-dimensional image and a 360-degree image (3D 360-degree image). In the content server 12, information may be stored by a person in charge of the accommodation facility 13 or one or more photographers.

The 3D 180-degree image and the 3D 360-degree image in the first embodiment are images obtained by capturing a real space with a camera (stereo camera) having a plurality of fish-eye lenses arranged in parallel. The 3D 180-degree image is a type of three-dimensional image obtained by capturing a space at about a 180-degree horizontal angle of view ahead of the camera. The 3D 360-degree image is a type of three-dimensional image of a 360-degree space. The 3D 180-degree image and the 3D 360-degree image are each composed of two images with a parallax. One of the two images corresponds to the right eye of the user, and the other corresponds to the left eye of the user. The user views, through a compatible HMD, the 3D 180-degree image and the 3D 360-degree image that have been subjected to predetermined processing using image editing software or the like. This provides a three-dimensional view of an object for the user, enabling a view with a sense of immersion.

In general, it is assumed that an effective field of view that a human can consciously view at one time is about 60 to 70 degrees in the horizontal direction forward. In the first embodiment, an image larger than this range is referred to as a 3D 180-degree image. An image captured in a horizontal range of 60 degrees or less and captured in a range (angle of view) that forms a relatively narrow angle with respect to the 3D 180-degree image is referred to as a 3D narrow-angle image. However, the 3D 180-degree image is not strictly limited to an image of a space having about a 180-degree horizontal angle of view. For example, the image may have a horizontal angle of view of 190 degrees, 220 degrees, 140 degrees, or 90 degrees. With the head mounted display (HMD), by moving the head or the line of sight, the user can view an image of an area larger than the effective field of view from among images captured as 3D 180-degree images and 3D 360-degree images.

The user may be allowed to view one of two images captured as a 3D 180-degree image or a 3D 360-degree image with a parallax. One of the two images with a parallax may be a two-dimensional image as a 180-degree image (2D 180-degree image) or a two-dimensional image as a 360-degree image (2D 360-degree image). When viewing the 2D 180-degree image and the 2D 360-degree image using the HMD, the user cannot obtain a stereoscopic effect but can confirm the surroundings. When viewing 2D 180-degree images and 2D 360-degree images on terminals such as a personal computer and a smartphone that display two-dimensional images, the user can change the point of view with a user operation. In such a case, the user cannot obtain a sense of immersion. In contrast, in this case, the amount of information obtained by the user from the image increases as compared with a simple two-dimensional image.

In the first embodiment, a 3D 180-degree image, a 3D 360-degree image, a 3D narrow-angle image, a 2D 180-degree image, and a 2D 360-degree image are collectively referred to as VR images. The VR image may be a still image or a moving image. Since a VR image contains a large amount of information as compared with a simple two-dimensional image, the band of the network may be compressed when the VR image is downloaded to the user terminal 16. For this reason, the VR image is required to be transmitted to an appropriate object at an appropriate timing.

VR images to be stored in the content server 12 are not always stored by a person in charge of the accommodation facility 13. VR images may be stored in the content server 12 by one or more photographers 151 and 152. The photographers 151 and 152 may be, for example, guests of the accommodation facility 13, and VR images of meals and the interior views of rooms in which the photographers 151 and 152 actually stayed may be stored in association with a reserved plan. As described above, a person to store VR images in the content server 12 is not limited to a person in charge of the accommodation facility 13. Thus, even when a person in charge of the accommodation facility 13 does not take VR images of the facility, it is expected that high-quality VR images can be obtained by a plurality of guests having a high level of literacy regarding VR images.

The user terminal 16 can be connected to the reservation management system 11 via a network such as the Internet and has a display unit. In the first embodiment, as the user terminals 16, terminals capable of displaying two-dimensional images of a personal computer 161 and a smartphone 162 and a terminal capable of displaying three-dimensional VR images of an HMD 163 or the like are connected to the reservation management system 11. However, the user terminal 16 may be any terminal if the user terminal 16 can be connected to the network, can display images, and enables a user operation.

When being connected to the reservation management system 11, the user terminal 16 transmits terminal type information or the like to the reservation management system 11. The reservation management system 11 receives the terminal type information transmitted from the user terminal 16 and identification information to be described later. The reservation management system 11 changes the image format to be displayed on the user terminal 16, on the basis of an operation of the user terminal 16. The user terminal 16 displays, on the display unit, a non-VR image or a VR image that is transmitted from the reservation management system 11.

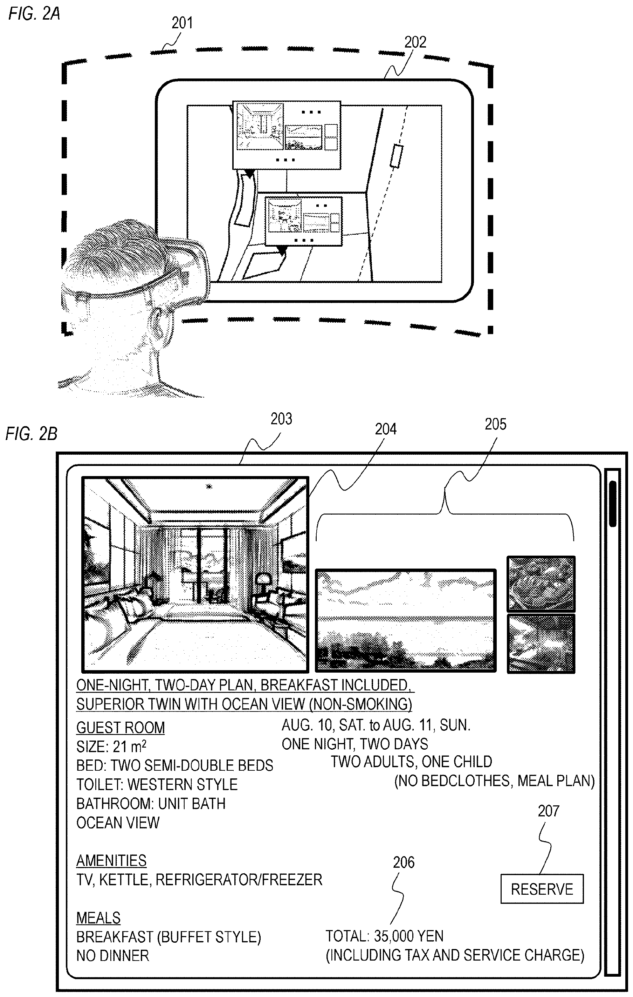

Referring to FIGS. 2A to 8B, the flow in which the user reserves a plan using the HMD 163 (user terminal 16) will be described below. FIGS. 2A and 2B show the display of the HMD 163. In FIG. 2A, the user wearing the HMD 163 is viewing the screen displayed on the HMD 163. In FIG. 2A, a frame 201 indicated by a broken line shows a range visible to the user wearing the HMD 163. A search page 202 displays a plurality of accommodation facilities selectable by the user. In the search page 202, a non-VR image is displayed to indicate the position of an accommodation facility on a map. When the user uses the personal computer 161 or the smartphone 162, the search page 202 is displayed on the display unit.

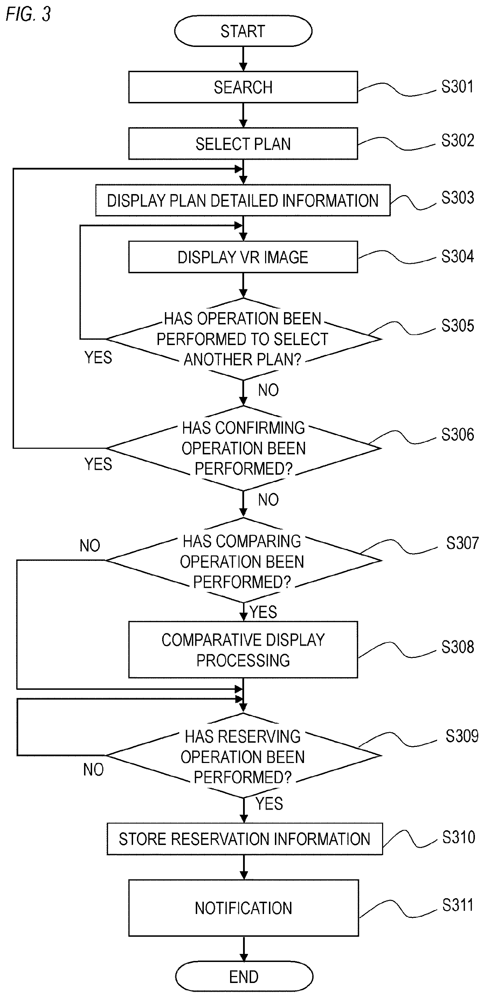

FIG. 3 is a flowchart showing the operations of the reservation management system 11 when the user reserves a plan using the HMD 163. The processing of the flowchart starts with "the user accesses the reservation management system 11 using the HMD 163 and enters information such as an accommodation date and time, the number of guests, and an accommodation place or the like while viewing the search page 202".

In S301, the control unit 113 searches the accommodation plan DB 111 for plans that satisfy the search conditions among available plans. The display control unit 114 causes the HMD 163 to display the result of search performed by the control unit 113 from the accommodation plan DB 111. The search result displayed on the HMD 163 may be, for example, two-dimensional information indicating the contents of a main plan (price, plan name, etc.) while indicating the locations of candidate accommodation facilities on a map. When the search result is displayed, the user performs a user operation (selection operation) to select, from a plurality of displayed plans (search result), one of the plans close to the desired conditions.

In S302, the control unit 113 selects a plan corresponding to the selecting operation.

In S303, the display control unit 114 causes the HMD 163 to display detailed information on the plan selected in S302. As shown in FIG. 2B, the HMD 163 displays, as two-dimensional information, a detail screen 203 showing various kinds of information on the plan selected by the selecting operation.

The detail screen 203 includes information such as a room size and a bed size of the plan selected in S302. The detail screen 203 includes a two-dimensional thumbnail 204, a two-dimensional thumbnail 205, price information 206, and a reservation button 207. The two-dimensional thumbnail 204 shows the interior view of the room. The two-dimensional thumbnail 205 shows views from the room, meals, and the open-air bath or the like. The reservation button 207 is a button for applying for a reservation. It is assumed that the user selects the two-dimensional thumbnail 204 to obtain detailed information on the interior view of the room of the selected plan.

In S304, the display control unit 114 causes the HMD 163 to display a VR image corresponding to the two-dimensional thumbnail 204. For this purpose, when detecting a user operation for selecting the two-dimensional thumbnail 204, the control unit 113 first acquires terminal type information. The display control unit 114 transmits an image in an image format corresponding to the terminal type information (terminal) to the user terminal 16. In the first embodiment, since the user accesses the reservation management system 11 using HMD 163, the display control unit 114 transmits a VR image of an interior view of the room from the content server 12 to the HMD 163. Therefore, the display control unit 114 controls the display unit of the HMD 163 so as to display the VR image of the interior view of the room. This allows the user to confirm the VR image using the HMD 163.

The image formats of VR images include a 3D 180-degree image, a 3D 360-degree image, a 2D 180-degree image, and a 2D 360-degree image. In the first embodiment, it is assumed that a 3D 180-degree image is associated with a plan selected by the user.

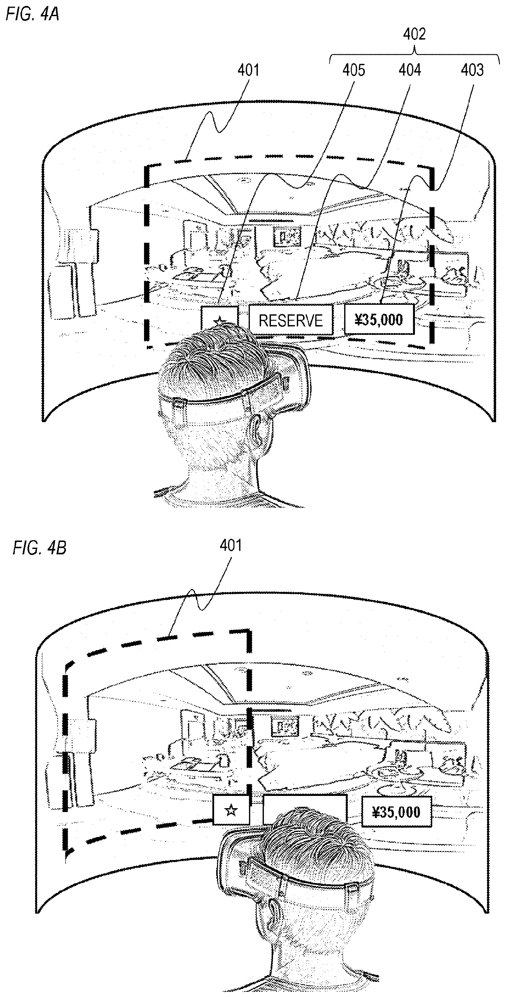

FIGS. 4A and 4B show a state in which a VR image showing an interior view of a room is displayed on the HMD 163. In FIGS. 4A and 4B, a frame 401 indicated by a broken line indicates the field of view of the HMD 163, a viewing range of the user in the VR image. On the HMD 163, a range displayed in the VR image is changed by moving the frame 401 according to a movement of the user to change the direction of the head. For example, when the user viewing the image of the frame 401 shown in FIG. 4A turns the head to the left, the range displayed in the VR image is changed as shown in FIG. 4B. In the first embodiment, the VR image displayed on the HMD 163 is a 3D 180-degree image, allowing the user to feel as if he or she is looking around in the room.

The display control unit 114 may display a non-VR image, which corresponds to the plan selected on the basis of the selecting operation, such that the non-VR image is superimposed on the VR image displayed on the HMD 163. In the first embodiment, price information 403, a reservation button 404, and a registration button 405 are displayed so as to be superimposed on a VR image of the interior view of the room. The price information 403 indicates price information on the selected plan. The reservation button 404 is a button for applying for a reservation of the selected plan. The registration button 405 is a button for registering the selected plan as a favorite to compare the selected plan with other plans later. The price information 403, the reservation button 404 and the registration button 405 are collectively referred to as superimposed two-dimensional information 402. When the selected plan is not registered as a favorite, the registration button 405 is displayed as, for example, a hollow star mark. When the selected plan is registered as a favorite, the registration button 405 is displayed as, for example, a black star mark.

To improve visibility, the superimposed two-dimensional information 402 is preferably displayed so as to be superimposed at a position closer to the user than the VR image (a position close to the user side). For example, the superimposed two-dimensional information 402 is displayed at a location virtually remote from the user by the 40 cm. In addition, a 3D 180-degree image of the interior of the room is preferably imaged such that the nearest object is placed at a distance of 50 cm or more from the user.

In S305, the control unit 113 determines whether or not the user has performed an operation (referred to as "another plan selecting operation") for selecting another plan (a plan different from the plan selected in S302). When determining that the user has performed the another plan selecting operation, the control unit 113 returns the processing to S304. When determining that the user has not performed the another plan selecting operation, the control unit 113 advances the processing to S306. The user may register the plan displayed by the another plan selecting operation, as a favorite by using the registration button 405.

In S306, the control unit 113 determines whether or not the user has performed a user operation (referred to as a "confirming operation") for confirming various kinds of information corresponding to the plan selected in S305. When determining that the user has performed the confirming operation, the control unit 113 returns the processing to S303. When determining that the user has not performed the confirming operation, the control unit 113 advances the processing to S307.

In S307, the display control unit 114 determines whether or not the user has performed an operation (referred to as "comparing operation") for selecting a mode (plan comparison mode) for comparing plans registered as favorites. When determining that the user has performed the comparing operation, the display control unit 114 advances the processing to S308. When determining that the user has not performed the comparing operation, the display control unit 114 advances the processing to S309. In the first embodiment, processing executed by the display control unit 114 in the plan comparison mode is referred to as comparative display processing. When the comparing operation cannot be performed (for example, when the user has registered only one plan as a favorite), the display control unit 114 may advance the processing to S309.

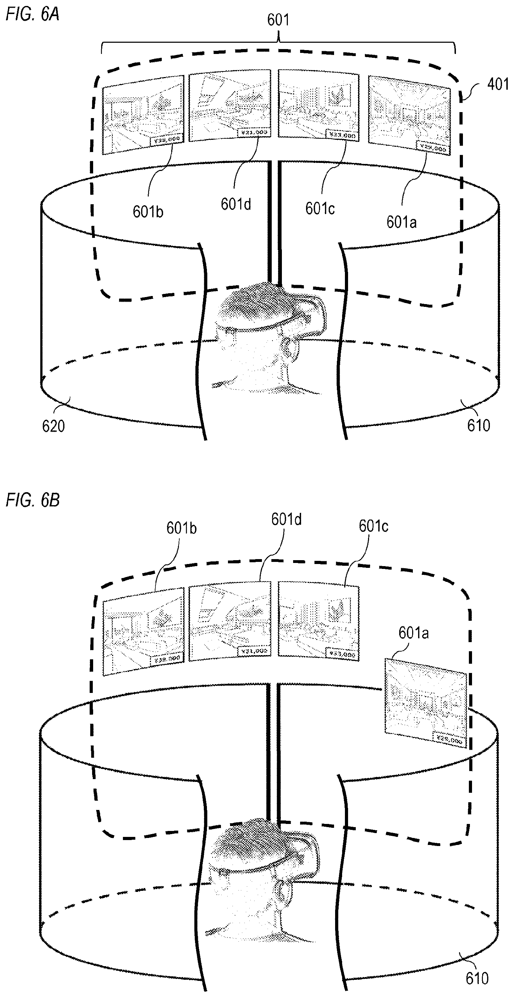

In S308, the display control unit 114 performs comparative display processing. The comparative display processing will be described with reference to FIGS. 6A to 8B. In the comparative display processing, the display control unit 114 causes the HMD 163 to display a thumbnail group 601. The thumbnail group 601 is a two-dimensional thumbnail image group corresponding to a plurality of plans (a plurality of VR images associated with the plans) registered as favorites by the user. The display control unit 114 displays the images of a VR space in which at least two VR images selected by the selection unit 117 are arranged. FIG. 6A shows a state in which the thumbnail group 601 is displayed on the HMD 163. On the HMD 163, the thumbnail group 601 is displayed in the upper part of the field of view of the user facing in the horizontal direction (in the upper part of the user's field of view).

The display control unit 114 changes the position of the frame 401 as the user moves his or her head in the horizontal direction (lateral direction). Even when the position of the frame 401 is changed, the display control unit 114 performs control such that the thumbnail group 601 is displayed in the front of the user's line of sight in response to a motion of the user looking up at the thumbnail group 601.

The display control unit 114 controls the display unit of the HMD 163 so as to display an image of the VR space in the comparative display processing. In this case, two regions are arranged in the horizontal direction in a space surrounding the user in the VR space. On the HMD 163, a first region 610 disposed on the right side and a second region 620 disposed on the left side are displayed side by side with respect to the user facing frontward. In FIGS. 6A to 8B, for convenience, the first region 610 and the second region 620 are illustrated as band-shaped regions that are obstructed in view in the vertical direction, but actually, the display region that is a combination of the first region 610 and the second region 620 has a hemispherical dome shape. Furthermore, when the VR space is viewed in the vertical direction, the first region 610 and the second region 620 are displayed as separate 180-degree ranges around the position of the user. In the first embodiment, the images in the VR space, that is, images displayed in the first region 610 and the second region 620 have the same size and the same projection size. The present disclosure is not limited thereto.

The first region 610 and the second region 620 are formed in hemispherical dome shapes so as to cover the 360-degree circumference in the horizontal direction when viewed from the user in the VR space. The display regions are formed in hemispherical dome shapes, so that the user can obtain a sense of immersion by viewing VR images displayed in the first region 610 and the second region 620.

The operation of the selection unit 117 in the comparative display processing will be described below. The selection unit 117 selects at least two VR images from a plurality of VR images related to a plurality of plans in response to an operation when the user compares plans. In the plan comparison mode, the user first selects one plan to be compared from the thumbnail group 601. As shown in FIG. 6B, the user drags and drops a thumbnail 601a, which indicates a plan to be compared, onto the first region 610 from the thumbnail group 601 by a hand gesture or a controller connected to the HMD 163. In response to such a user operation (drag-and-drop), the selection unit 117 selects the first VR image (a 3D 180-degree image associated with the thumbnail 601a). The display control unit 114 displays the VR image selected by the selection unit 117 on the display unit (first region 610) of the HMD 163.

As a comparison target of the plan shown in the thumbnail 601a, the user selects a thumbnail image showing a plan different from the plan shown in the thumbnail 601a. Here, it is assumed that the user has dragged and dropped a thumbnail 601b onto the second region 620 by a hand gesture or the controller connected to the HMD 163. The selection unit 117 selects the second VR image (a 3D 180-degree image associated with the thumbnail 601b) in response to such a user operation. The display control unit 114 displays the VR image selected by the selection unit 117 on the display unit (second region 620) of the HMD 163. When one plan is registered as a favorite, for example, the selection unit 117 determines that the number of plans that can be compared is not larger than a threshold value, and may automatically select, as a comparison target, a plan different from the plan registered as a favorite. For example, when only the plan shown in the thumbnail 601a is registered as a favorite, the selection unit 117 may automatically select a plan to be compared in relation to the plan shown in the thumbnail 601a.

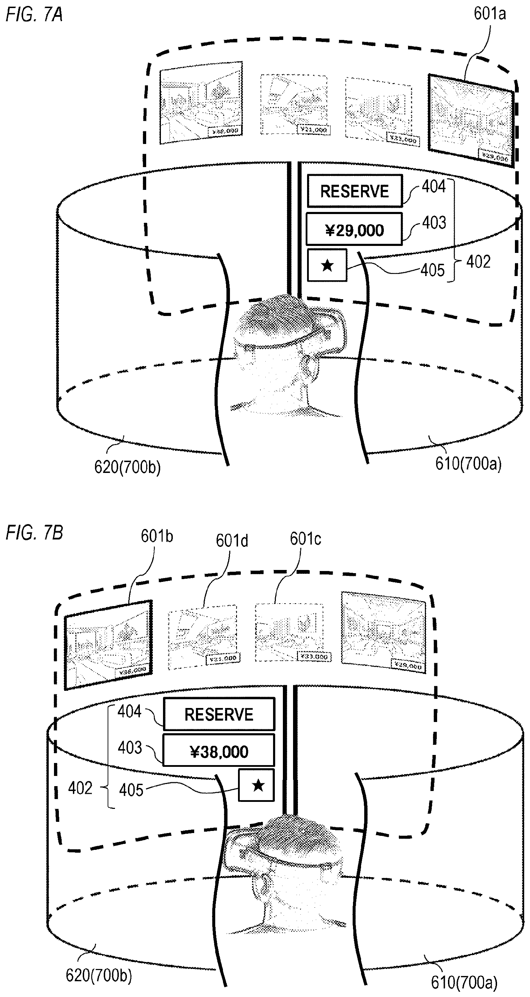

In FIGS. 7A and 7B, an image 700a that is a 3D 180-degree image associated with the thumbnail 601a is displayed in the first region 610. In the second region 620, an image 700b that is a 3D 180-degree image associated with the thumbnail 601b is displayed. As shown in FIG. 7A, when the user views the image in the direction of the first region 610, the display control unit 114 displays the enhanced edge of the thumbnail 601a included in the thumbnail group 601. This indicates that the image 700a is associated with the thumbnail 601a.

The display control unit 114 determines the superimposed two-dimensional information 402 corresponding to the contents of the image 700a. The display control unit 114 displays the determined superimposed two-dimensional information 402 such that the two-dimensional information 402 is superimposed on the image 700a in the field of view of the HMD 163 and in the first region 610. Since the plan related to the thumbnail 601a has been already registered as a favorite, the registration button 405 provides display (black star mark) to shows the registration.

In the following description, it is assumed that the user desires to cancel registration of a favorite plan related to the thumbnail 601a and to exclude the plan from comparison targets. If the user selects the registration button 405 in the state shown in FIG. 7A, the display control unit 114 switches the display of the registration button 405 to indicate that the registration has been canceled (a hollow star mark, not shown). The thumbnail 601a is deleted from the thumbnail group 601.

As shown in FIG. 7B, when the user faces in the direction of the second region 620, the display control unit 114 cancels the edge enhancement of the thumbnail 601a and displays the enhanced edge of the thumbnail 601b. This indicates that the image 700b is associated with the thumbnail 601b. In the first embodiment, the display control unit 114 displays thumbnails 601c and 601d, which are not shown in the first region 610 or the second region 620, with a smaller size and a thinner color than the thumbnails 601a and 601b. The thumbnails 601c and 601d displayed thus indicate that the VR image associated with the thumbnail 601c and the VR image associated with the thumbnail 601d are not displayed on the display unit of the HMD 163. When the user faces in the direction of the second region 620, the display control unit 114 determines the superimposed two-dimensional information 402 corresponding to the contents of the image 700b. The display control unit 114 displays the determined superimposed two-dimensional information 402 such that the two-dimensional information 402 is superimposed on the image 700b in the field of view of the HMD 163 and in the second region 620.

Referring to FIGS. 8A and 8B, a case where the user changes the contents displayed in the first region 610 will be described below. When the user drags and drops the thumbnail 601c in the thumbnail group 601 onto the first region 610, the selection unit 117 accepts the user operation. In response to such a user operation, the selection unit 117 selects an image 800 (a 3D 180-degree image associated with the thumbnail 601c) as a VR image to be replaced with the image 700a. The display control unit 114 displays the image 800 (VR image) selected by the selection unit 117 on the display unit (the first region 610) of the HMD 163. The display control unit 114 enhances the edge of the thumbnail 601c included in the thumbnail group 601, and changes the thumbnail 601c to the same size as the thumbnail 601b. The display control unit 114 cancels the edge enhancement of the replaced thumbnail 601a and changes the display of the thumbnail 601a to a small size and a thin color. Furthermore, the display control unit 114 changes the contents of the superimposed two-dimensional information 402 to information about a plan associated with the thumbnail 601c.

In the plan comparison mode, the user can compare two plans while confirming the interior, furnishings, area, and price of the room with head shaking. When the image 800 and the image 700b are displayed, if the user determines that a plan for the image 800 (thumbnail 601c) is preferable, the user selects the reservation button 404 shown in FIG. 8B, enabling a reserving operation of the plan for the image 800.

Returning to the description of FIG. 3, in step S309, the control unit 113 determines whether the user has performed a user operation (reserving operation) for reserving the selected plan. When determining that the user has performed the reserving operation, the control unit 113 advances the processing to S310. When determining that the user has not performed the reserving operation, the control unit 113 waits for a reserving operation. When the user selects the reservation button 404, the HMD 163 displays the application screen (not shown) for the selected plan. The application screen is composed of two-dimensional information. After personal information on the user and payment information are additionally entered on the application screen, the reservation is confirmed on the final confirmation screen to conclude the contract.

In S310, the control unit 113 stores reservation information based on a user operation or the like on the HMD 163, in the reservation information DB 112. The reservation information is information associated with personal information on the user, identification information, plan information, and surrounding information (information including these pieces of information).

Hereinafter, it is assumed that the user uses the user terminal 16 such as the personal computer 161 or the smartphone 162 that can provide only two-dimensional display. The display control unit 114 controls the user terminal 16 according to the terminal type information to display a non-VR image that allows confirmation of the room interior of the plan selected by the user. If a VR image and a non-VR image are both stored in the accommodation plan DB 111 or the content server 12, the display control unit 114 may transmit any one of the VR image and the non-VR image according to the terminal type information to the user terminal 16. When the user selects the two-dimensional thumbnail 204, the display control unit 114 transmits, to the user terminal 16, a non-VR image corresponding to an interior view of the room of the plan selected by the user.

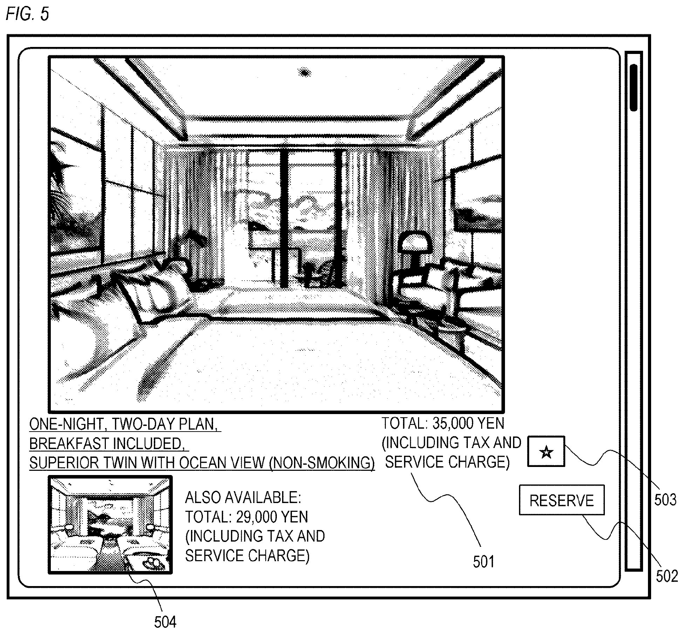

FIG. 5 shows a state in which a non-VR image representing an interior view of the room is displayed on the display unit of the personal computer 161 or the smartphone 162. On the display unit, price information 501, a reservation button 502, and a registration button 503 are displayed as two-dimensional information. The price information 501 indicates price information on the selected plan. The reservation button 502 is a button for applying for a reservation of the selected plan. The registration button 503 is a button for registering the selected plan as a favorite plan such that the user can compare the plan with another plan later. Various kinds of two-dimensional information are displayed so as not to be superimposed on the non-VR image corresponding to the interior view of the room. Furthermore, a two-dimensional thumbnail 504 is displayed to facilitate comparison between the selected plan and another plan. The two-dimensional thumbnail 504 is a thumbnail image of an image corresponding to an interior view of the room of another plan. The two-dimensional thumbnail 504 is displayed so as not to be superimposed on the non-VR image corresponding to the interior view of the room. By selecting the two-dimensional thumbnail 504, the user can view the image corresponding to another plan. The flow before the confirmation of the reservation is identical to that when the VR image is viewed on the HMD 163, and thus an explanation thereof is omitted. In the identification information associated with the reservation information, a reserving operation performed by the user viewing the non-VR image is recorded.

Returning to FIG. 3, in S311, the notification unit 116 notifies the confirmation of the reservation via e-mail or the like to the user's contact address registered by the user, on the basis of the reservation information. In addition, the notification unit 116 notifies the confirmation of the reservation to the accommodation facility 13 or the travel agent 14 via e-mail or the like on the basis of the reservation information. The e-mail contains a link (URL) to the reservation information, allowing the user to confirm the contents of the reservation by selecting the link.

As described above, the display control unit 114 divides a 360-degree region around the user into two different regions in the VR space, and displays a single 3D 180-degree image in one of the regions and a different 3D 180-degree image in the other region. This causes the display control unit 114 to display the two 3D 180-degree images surrounding the user. Thus, the user can compare the two rooms only by turning the head of the user without performing a screen switching operation. In addition, since the user can compare the two rooms only by turning the head, a quick comparison can be made without a time lag. The two 3D 180-degree images displayed on the HMD 163 in the first embodiment are VR images that have the same size and the same projection size and extend in the depth direction. This reduces a sudden vergence eye movement of both eyes during comparison, thereby easing eyestrain.

In the first embodiment, the display control unit 114 displays the image of a VR space in which 3D 180-degree images associated with two different plans are arranged in the horizontal direction. In this case, the two 3D 180-degree images arranged in the VR space do not need to be 3D 180-degree images associated with two different plans. For example, the two 3D 180-degree images arranged in the VR space are associated with the same plan but may also be VR images obtained by capturing the real space at different times such as during the day and at night. The two 3D 180-degree images arranged in the VR space may also be VR images obtained by capturing the real space at different locations.

Furthermore, the VR images displayed on the HMD 163 by the display control unit 114 are not limited to 3D 180-degree images but may be, for example, 2D 180-degree images. When the VR images displayed on the HMD 163 by the display control unit 114 are 3D 360-degree images or 2D 360-degree images, the display control unit 114 may display part of each of the VR images. When the VR images displayed in the first region 610 and the second region 620 are 3D narrow-angle images having small angles of view, the first region 610 and the second region 620 do not need to have hemispherical dome shapes. For example, the display control unit 114 may display an image of the VR space in which two flat screen-shaped display areas are arranged in the horizontal direction (lateral direction) as viewed from the user.

In addition, the VR image selected by the selection unit 117 is not limited to a VR image relating to an accommodation plan or a VR image of a room of an accommodation facility. For example, the selection unit 117 may select VR images classified into the same category, from the contents of VR images requested by the user. For example, when the VR image displayed on the HMD 163 is an image categorized as "activity to experience" of the user, the display control unit 114 may perform control to arrange a VR image of a ski resort and a VR image of a surfing venue.

In addition, in the first embodiment, the display control unit 114 arranges the two 3D 180-degree images associated with the two plans. However, the number of VR images that can be arranged is not limited to two, and may be three or more. In the first embodiment, the thumbnail group 601 is displayed without overlapping the plans. However, for example, if many plans are targets of comparison, the thumbnail group 601 is displayed with overlapping thumbnail images to save the display area. Even if the thumbnail images are displayed so as to be superimposed on one another, an image already selected by the user and an image to be selected by the user are preferably displayed without overlapping each other.

### Second Embodiment

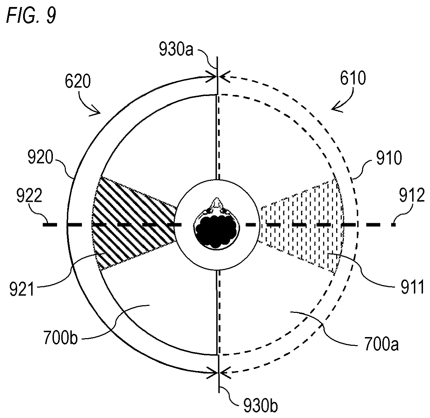

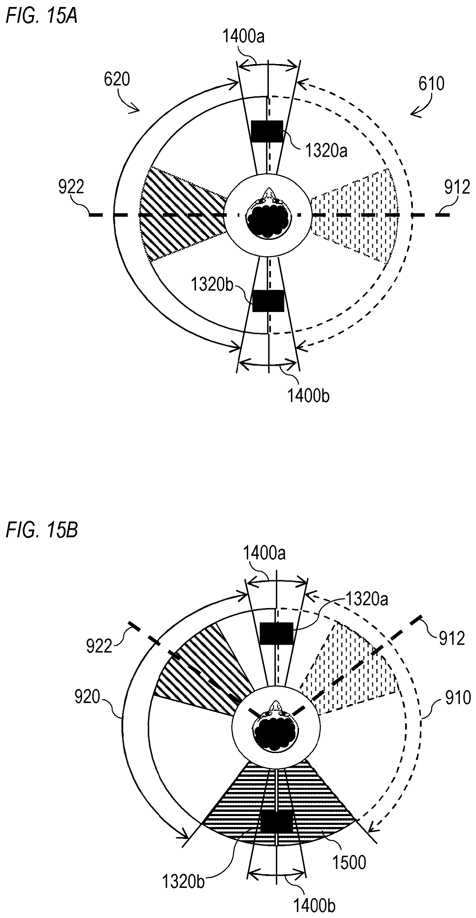

Referring to FIGS. 9 to 15B, a second embodiment will be described below. The description on the same configurations as those in the first embodiment is omitted. In the second embodiment, in comparative display processing, a display control unit 114 displays an image in a VR space in which at least two VR images are arranged in a 360-degree range around a user.

FIG. 9 is a schematic diagram of a VR space displayed by the display control unit 114 in the first embodiment, the VR space being viewed in the vertical direction. An image 700a is displayed in a first region 610 and an image 700b is displayed in a second region 620. A range 910 shows the range of the first region 610 (the display range of the image 700a) in the VR space, and a range 920 shows the range of the second region 620 (the display range of the image 700b) in the VR space. Two boundary portions where the first region 610 and the second region 620 are adjacent to each other are denoted as boundary portions 930a and 930b.

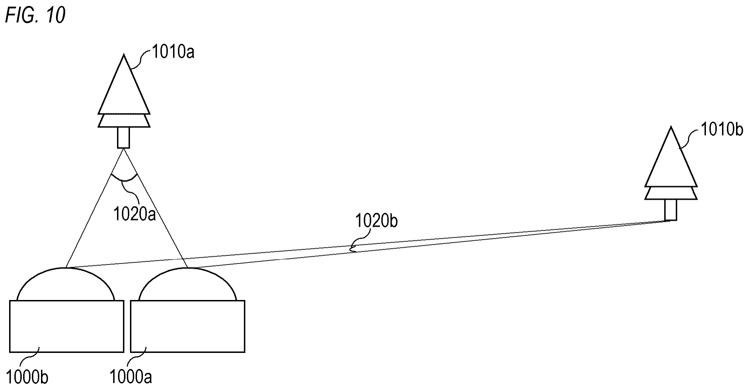

The feature of a 3D 180-degree image will be described below. FIG. 10 is a schematic view of a stereo camera for capturing a 3D 180-degree image. Cameras 1000a and 1000b are cameras having fish-eye lenses capable of imaging at the same angle of view (desirably capable of imaging an actual space having a horizontal angle of view of 180 degrees or more). The camera 1000a and the camera 1000b are located a predetermined distance apart. The predetermined distance may be about 64 to 65 mm, which is the mean value of distances between pupils of human eyes. Hereinafter, it is assumed that an object is located in the vicinity of the fronts of the two cameras, like an object 1010a located with respect to the position of the cameras 1000a and 1000b. When the object 1010a is simultaneously captured by the cameras 1000a and 1000b, a convergence angle 1020a is formed by the imaging direction of the camera 1000a and the imaging direction of the camera 1000b, so that two object images can be obtained with a parallax.

The user visually recognizes the image captured by the right camera 1000a with the right eye using an HMD 163, and visually recognizes the image captured by the left camera 1000b with the left eye. This enables the user to have a stereoscopic view of the object and feel like the user is part of the scene.

Hereinafter, it is assumed that the object is located at a position fairly remote from the fronts of the two cameras, like an object 1010b located with respect to the positions of the cameras 1000a and 1000b. In this case, a convergence angle 1020b is small and the parallax between the object image captured by the camera 1000a and the object image captured by the camera 1000b decreases. Therefore, only the same image can be acquired by the camera 1000a and the camera 1000b. When the parallax of the VR images (3D 180-degree images) is small, it is difficult for the user to obtain a stereoscopic effect. Furthermore, the stereoscopic effect obtained by the user deteriorates from the peak in the central portion to the peripheral portion of the image. In this way, the 3D 180-degree image has a region (hereinafter referred to as a "central region") in which the user having visually recognized the captured image can obtain the stereoscopic effect, near the center of the image.

Returning to FIG. 9, a first central region 911 is a region that allows the user to obtain the maximum stereoscopic effect in the first region 610. A second central region 921 is a region that allows the user to obtain the maximum stereoscopic effect in the second region 620. A first central axis 912 is the central axis of the first central region and is a straight line connecting the position of the user wearing the HMD 163 and the center of the first region 610. A second central axis 922 is the central axis of the second central region and is a straight line connecting the position of the user wearing the HMD 163 and the center of the second region 620. In the arrangement of the 3D 180-degree images (first embodiment) shown in FIG. 9, the angle formed by the first central axis 912 and the second central axis 922 is about 180 degrees.

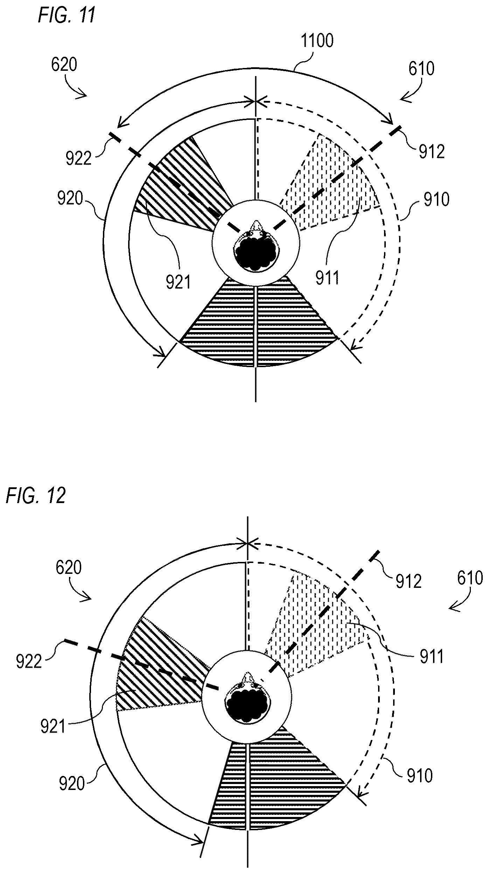

FIGS. 11 and 12 are schematic diagrams in which a VR space displayed by the display control unit 114 is viewed in the vertical direction in the second embodiment. In the second embodiment, the display control unit 114 places the first region 610 and the second region 620 such that an angle 1100 formed by the first central axis 912 and the second central axis 922 is smaller than 180 degrees. By placing the first region 610 and the second region 620 thus, the user can reduce the angle for turning his/her head when comparing two VR images, thereby easing fatigue of the user. FIG. 11 shows a state in which the angle formed by the first central axis 912 and the second central axis 922 is about 90 degrees. In the state shown in FIG. 11, the display ranges indicated by the ranges 910 and 920 are narrower than the imaging range (180 degrees) of a 3D 180-degree image. Therefore, by setting the angle 1100 formed by the first central axis 912 and the second central axis 922 to 60 degrees or more, a hidden range in the 3D 180-degree image can be reduced.

The display control unit 114 may accept a user operation for moving a horizontal position of the first central region 911 (a horizontal position of the image 700a) and a horizontal position of the second central region 921 (a horizontal position of the image 700b) in the second region 620. Accordingly, as shown in FIG. 12, the user can confirm the hidden range in the 3D 180-degree image. Furthermore, the user can set the positions of the first central region 911 and the second central region 921 suitably for the posture of the user, facilitating the comparison. However, the display control unit 114 does not need to accept such a user operation. For example, the reservation management system 11 may further include a position determining unit as a component for determining a display position, and the position determining unit may accept a user operation. In addition, the position determining unit may automatically determine a suitable position for displaying the images 700a and 700b according to the posture of the user.

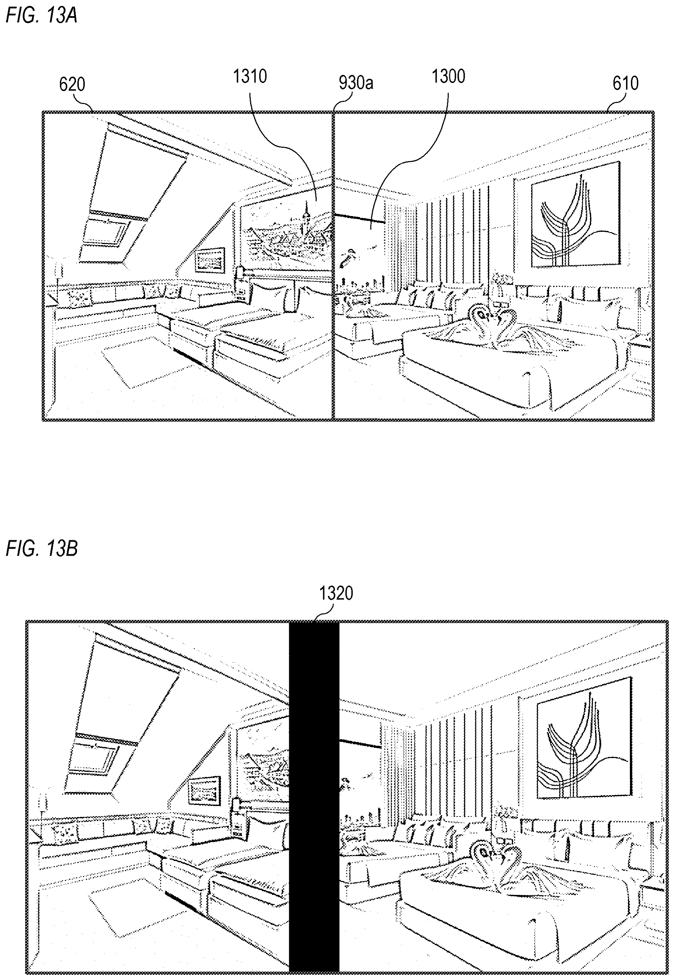

Since different 3D 180-degree images are adjacent to each other at the boundary portions 930a and 930b, which are the boundary portions between the first region 610 and the second region 620, perspective conflict is likely to occur. Referring to FIG. 13A, perspective conflict will be described below. FIG. 13A schematically shows 3D 180-degree images displayed in the first region 610 and the second region 620 as two-dimensional images. A window frame and sky 1300 viewable therefrom remotely from the user are displayed in a portion along the boundary portion 930a in the first region 610, and a room wall 1310 is displayed in a portion along the boundary portion 930a in the second region 620. In the case of FIG. 13A, the wall 1310 is assumed to be visible closer to the user than the sky 1300. However, the wall 1310 may appear to be hidden behind the sky 1300 from the user. In this manner, when the perspective positional relationship between an object and the space in the VR space appears inconsistent with the perspective positional relationship between the object and the space in the real space, the quality of the stereoscopic view is significantly impaired. Such a state in which perspective in the VR space is inconsistent with the positional relationship in the real space is referred to as perspective conflict.

In order to reduce discomfort caused by perspective conflict, a non-display region 1320 in which the VR image is hidden may be disposed between the first region 610 and the second region 620 as shown in FIG. 13B. In addition, a distance between the user and the non-display region 1320 in stereoscopic view is preferably set shorter than a predetermined distance.

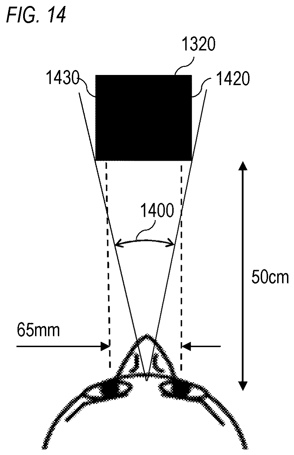

FIG. 14 is a schematic view of the VR space viewed in the vertical direction. The non-display region 1320 in the VR space will be described below. In the second embodiment, the display control unit 114 displays, on the display unit of the HMD 163, a VR image in which a black and quadrangular prism-shaped virtual object is arranged as the non-display region 1320 in the VR space. The position at which the display control unit 114 places the non-display region 1320 (black virtual object) in the VR space will be described below. Generally, it is said that clear human vision for an object requires at least a distance of about 25 cm between a human eye and the object. Therefore, the display control unit 114 preferably determines the position of the non-display region 1320 at a position at a longer distance than 25 cm as viewed from the user and closer to the user than the object shown in the 3D 180-degree image. Accordingly, the distance from the user to the non-display region 1320 is preferably about 50 cm. However, the virtual object placed as the non-display region is not limited to the black quadrangular prism shape. The virtual object may be any object if the object can shield a part of the first region 610 and a part of the second region 620 (the boundary portion between the first region 610 and the second region 620).

In the second embodiment, a case where the distance from the user to the non-display region 1320 is 50 cm will be described below. A side 1420 shown in FIG. 14 is the side of one end of the non-display region 1320 when the VR space is viewed in the vertical direction. Aside 1430 shown in FIG. 14 is the side of the other end of the non-display region 1320 when the VR space is viewed in the vertical direction. When the VR space is viewed in the vertical direction, an angle 1400 formed by "a straight line connecting the side 1420 and the user" and "a straight line connecting the side 1430 and the user" is preferably at least 8 degrees and not more than 30 degrees.

As shown in FIG. 14, when the VR space is viewed in the vertical direction, the width of the non-display region 1320 is preferably larger than about 65 mm, which is the distance between the right and left eyes of a human, at a 50-cm point in front of the user. Therefore, the display control unit 114 may determine the width of the non-display region 1320 to set the angle 1400 to 8 degrees or more. Since the display control unit 114 determines the width of the non-display region 1320 to set the angle 1400 to 8 degrees or more, it is unnecessary to display the sides of the non-display region 1320, thereby simplifying image processing. It is preferable that the width of the non-display region 1320 is not so large as to cover the effective field of view of a human. Therefore, the display control unit 114 preferably determines the width of the non-display region 1320 such that the angle 1400 is 30 degrees or less.

The display control unit 114 can display the boundary portions between the non-display region 1320 and the first region 610 and the second region 620 in a shading manner by blurring the sides 1420 and 1430 of the non-display region 1320. This can reduce user discomfort.

FIGS. 15A and 15B are schematic diagrams of a VR space viewed in the vertical direction, in which non-display regions 1320a and 1320b are placed at the respective boundary portions between the first region 610 and the second region 620. In the non-display region 1320a, an angle 1400a is an angle formed by "a straight line connecting one end of the non-display region 1320a and the user" and "a straight line connecting the other end of the non-display region 1320a and the user". In the non-display region 1320b, an angle 1400b is an angle formed by "a straight line connecting one end of the non-display region 1320b and the user" and "a straight line connecting the other end of the non-display region 1320b and the user". For the reason described above, the angles 1400a and 1400b are preferably at least 8 degrees and not more than 30 degrees. FIG. 15A is a schematic diagram of the VR space when the angle formed by the first central axis 912 and the second central axis 922 is about 180 degrees. FIG. 15B is a schematic diagram of the VR space when the angle formed by the first central axis 912 and the second central axis 922 is smaller than 180 degrees. In the case of FIG. 15B, the non-display regions 1320a and 1320b are arranged as in FIG. 15A. The non-display region 1320b (one of the two non-display regions) is placed in a region 1500 in which a 3D 180-degree image is not displayed (a region displayed in black on the display unit). In such a case, when the VR space is viewed in the vertical direction, a range at an angle of 30 degrees or more in the horizontal direction may be displayed as a black region on the display unit.

In the second embodiment, when the VR image is displayed with the first region 610 and the second region 620 arranged in the horizontal direction, the non-display regions 1320a and 1320b are arranged on the boundary portions between the first region 610 and the second region 620. Thus, the object included in the VR image displayed in the first region 610 and the second region 620 is shielded and obstructed in view. This can reduce user discomfort caused by perspective conflict. Since the boundary between the first region 610 and the second region 620 is clarified by placing the non-display regions 1320a and 1320b, the user can easily compare plans.

### Third Embodiment

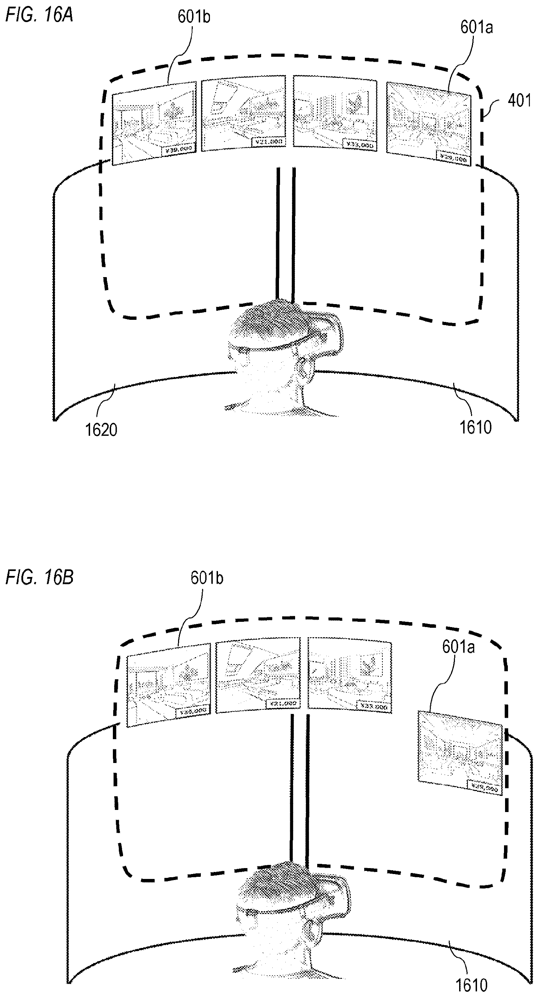

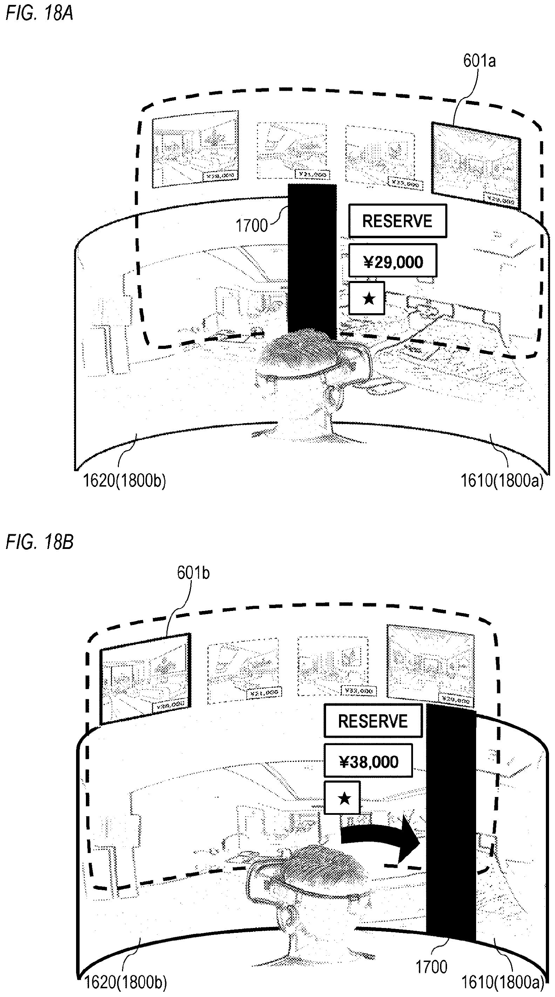

Referring to FIGS. 16A to 18B, a third embodiment will be described below. The description on the same configurations as those in the first embodiment and the second embodiment is omitted. In the third embodiment, a display control unit 114 displays an image of a VR space, in which at least two VR images are arranged, in comparative display processing as in the first embodiment and the second embodiment.

FIGS. 16A and 16B show a state in which a user has selected a plan comparison mode. A space extending with a view angle of 180 degrees in the horizontal direction includes a first region 1610 displayed with a horizontal view angle of 90 degrees on the right side when viewed from the user, and a second region 1620 displayed with a horizontal view angle of 90 degrees on the left side.

In the plan comparison mode, the user first selects one plan to be compared. As shown in FIG. 16B, the user drags and drops a thumbnail 601a, which indicates a plan to be compared, onto the first region 1610 from a thumbnail group 601 by a hand gesture or a controller connected to an HMD 163. In response to such a user operation (drag-and-drop), a selection unit 117 selects a first VR image (a 3D 180-degree image associated with the thumbnail 601a). The display control unit 114 displays the VR image selected by the selection unit 117 on the display unit (the first region 1610) of the HMD 163. The user then selects a thumbnail image representing a plan to be compared with the plan shown in the thumbnail 601a. In this case, it is assumed that the user has dragged and dropped a thumbnail 601b onto the second region 1620 by a hand gesture or a controller connected to the HMD 163. In response to such a user operation, the selection unit 117 selects a second VR image (a 3D 180-degree image associated with the thumbnail 601b). The display control unit 114 displays the VR image selected by the selection unit 117 on the display unit (second region 1620) of the HMD 163.

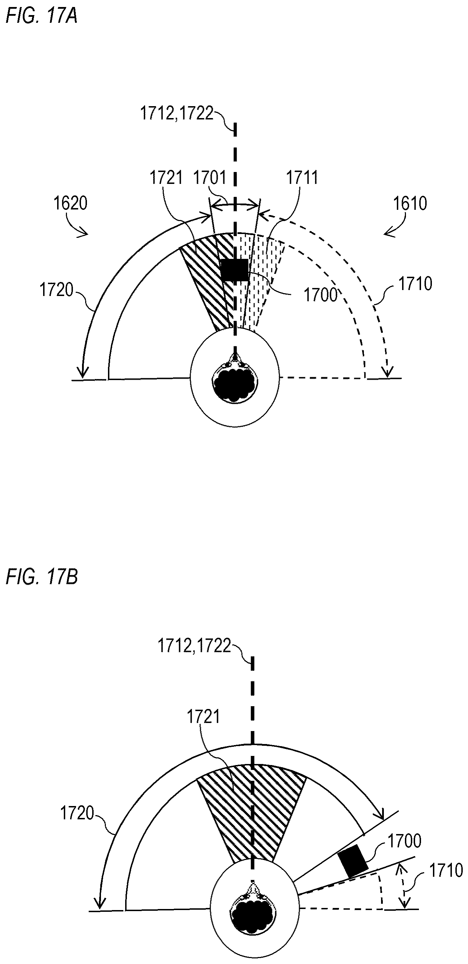

FIGS. 17A and 17B are schematic diagrams of a VR space displayed by the display control unit 114 when viewed in the vertical direction in the third embodiment. In the third embodiment, a non-display region 1700 is disposed on the boundary between the first region 1610 and the second region 1620. The third embodiment will describe a case in which a distance from the user to the non-display region 1700 is 50 cm. An angle 1701 is an angle formed by "a straight line connecting one end of the non-display region 1700 and the user" and "a straight line connecting the other end of the non-display region 1700 and the user". The angle 1701 is preferably at least 8 degrees and not more than 30 degrees like the angle 1400 described above. A range 1710 indicates the range of the first region 1610 (the display range of a 3D 180-degree image associated with the thumbnail 601a) in the VR space. A range 1720 indicates the range of the second region 1620 (the display range of a 3D 180-degree image associated with the thumbnail 601b) in the VR space. A first central region 1711 is a region in which the user can obtain the maximum stereoscopic effect in the first region 1610. A second central region 1721 is a region in which the user can obtain the maximum stereoscopic effect in the second region 1620. A first central axis 1712 is the central axis of the first central region 1711 and is a straight line connecting the position of the user wearing the HMD 163 and the center of the first region 1610. A second central axis 1722 is the central axis of the second central region 1721 and is a straight line connecting the position of the user wearing the HMD 163 and the center of the second region 1620.

FIGS. 18A and 18B show a state in which an image 1800a (a 3D 180-degree image associated with the thumbnail 601a) is displayed in the first region 1610 and an image 1800b (a 3D 180-degree image associated with the thumbnail 601b) is displayed in the second region 1620. As shown in FIG. 17A, in the third embodiment, the angle formed by the first central axis 1712 and the second central axis 1722 is 0 degrees, and the first central axis 1712 and the second central axis 1722 are oriented in the same direction. In the states shown in FIGS. 17A and 18A, the ranges 1710 and 1720 are ranges of about 90 degrees when the VR space is viewed in the vertical direction. Therefore, the images corresponding to 180 degrees, which is the imaging view angle of the images 1800a and 1800b, are not entirely displayed. A range hidden in the image corresponding to 180 degrees, which is the imaging view angle of the image 1800a, is arranged to overlap the rear side of the image 1800b. A range hidden in the image corresponding to 180 degrees, which is the imaging view angle of the image 1800b, is arranged to overlap the rear side of the image 1800a. Thus, the region in which the first region 1610 (image 1800a) and the second region 1620 (image 1800b) overlap each other is referred to as a superimposed region. The display control unit 114 determines which one of a part of the image 1800a and a part of the image 1800b is to be displayed in the superimposed region in response to a user operation.

The display control unit 114 may accept a user operation to move the position of the non-display region 1700 in the horizontal direction. However, such a user operation may not be accepted by the display control unit 114, but may be accepted by, for example, a component part (position determining unit) for determining the display position.

When a user operation is performed to move the non-display region 1700, the display control unit 114 changes the ranges 1710 and 1720. FIGS. 17B and 18B show a state in which a user operation is performed to move the non-display region 1700 to the right in the state shown in FIGS. 17A and 18A. The display control unit 114 narrows the range 1710 and enlarges the range 1720 for display. FIG. 17B shows a state in which the direction of the user's face coincides with the direction of the second central axis 1722. This allows the user to comfortably view the second central region 1721 of the 3D 180-degree image displayed in the second region 1620. In this case, when the user wants to confirm the 3D 180-degree image displayed in the first region 1610, the non-display region 1700 may be moved to the left to extend the range of the first region 1610. Accordingly, the user can comfortably view the first central region 1711 of the 3D 180-degree image displayed in the first region 1610 while aligning the direction of the first central axis 1712 and the direction of the face.

Thus, the display control unit 114 can arrange a plurality of 3D 180-degree images such that the central axes of the plurality of 3D 180-degree images are oriented in the same direction (the central regions of the plurality of 3D 180-degree images are aligned). Therefore, regardless of which one of the 3D 180-degree images (plans) is viewed by the user when the user compares the 3D 180-degree images, the display control unit 114 can display the central region of the 3D 180-degree image in front of the user's line of sight without changing the face direction. This allows the user to view a plurality of 3D 180-degree images without changing the face direction each time the 3D 180-degree image is changed, thereby easing fatigue.

Furthermore, in the third embodiment, the display control unit 114 horizontally arranges the two 3D 180-degree images associated with two plans. However, the number of VR images that can be arranged is not limited to two and may be three or more. The VR image displayed on the display unit of the HMD 163 is not limited to a 3D 180-degree image and may be a 2D 180-degree image or a 3D narrow-angle image. When the displayed VR image is a 3D narrow-angle image or the like, for example, the first region 1610 and the second region 1620 may be shaped like two flat screens that are arranged in the horizontal direction (lateral direction) when viewed from the user.

The display control unit 114 may arrange a plurality of 360-degree images (3D 360-degree images or 2D 360-degree images) such that the images are partially superimposed 360 degrees around the user, and may place a non-display region on each boundary. Furthermore, the display control unit 114 may perform control to move the placed non-display region and change the image range.

In the foregoing embodiments, the reservation management system 11 is described as a system for allowing the user to reserve an accommodation plan, but the present disclosure is not limited thereto. For example, the reservation management system 11 may be a system for allowing the user to reserve a ticket for a concert or the like or a system for allowing the user to purchase an article. In particular, the reservation management system 11 can be used effectively when the user wants to compare multiple VR images. In addition, the functional unit provided in the reservation management system 11 according to the embodiments may be provided in another information processing device. For example, the user terminal 16 may be an information processing device including a control unit, a display control unit, an acquisition unit, a notification unit, and a selection unit. In this case, the reservation management system 11 may be a server including only the accommodation plan DB 111 and the reservation information DB 112.

Note that the above-described various types of control may be processing that is carried out by one piece of hardware (e.g., processor or circuit), or otherwise. Processing may be shared among a plurality of pieces of hardware (e.g., a plurality of processors, a plurality of circuits, or a combination of one or more processors and one or more circuits), thereby carrying out the control of the entire device.

Also, the above processor is a processor in the broad sense, and includes general-purpose processors and dedicated processors. Examples of general-purpose processors include a central processing unit (CPU), a micro processing unit (MPU), a digital signal processor (DSP), and so forth. Examples of dedicated processors include a graphics processing unit (GPU), an application-specific integrated circuit (ASIC), a programmable logic device (PLD), and so forth. Examples of PLDs include a field-programmable gate array (FPGA), a complex programmable logic device (CPLD), and so forth.

The embodiment described above (including variation examples) is merely an example. Any configurations obtained by suitably modifying or changing some configurations of the embodiment within the scope of the subject matter of the present disclosure are also included in the present disclosure. The present disclosure also includes other configurations obtained by suitably combining various features of the embodiment.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An information processing device comprising:
selection means configured to select at least two VR contents from a plurality of VR contents in response to an operation from a user; and
display control means configured to control display means so as to display an image of a VR space in which the at least two VR contents selected by the selection means are arranged side by side, wherein
in a first case where a first VR content and a second VR content are selected by the selection means, the display control means controls the display means so as to display an image of the VR space in which a first region for displaying the first VR content and a second region for displaying the second VR content are arranged side by side.

2. The information processing device according to claim 1, wherein the display control means controls the display means so as to display the image of the VR space in which the at least two VR contents selected by the selection means are arranged in a horizontal direction.

3. The information processing device according to claim 1 or 2, wherein
the display control means controls the display means so as to display a plurality of thumbnail images corresponding to the plurality of VR contents, and
the operation is an operation for selecting by the user any one of the plurality of thumbnail images.

4. The information processing device according to any one of claims 1 to 3, wherein the plurality of VR contents are VR contents obtained by capturing a real space at different times or different places, or VR contents of an identical category.

5. The information processing device according to any one of claims 1 to 4, wherein in the first case,
the display control means controls the display means such that
a first non-VR content corresponding to the first VR content is superimposed onto the first VR content, and
a second non-VR content corresponding to the second VR content is superimposed on the second VR content.

6. The information processing device according to claim 5, wherein in the first case, the display control means
determines the first non-VR content according to details of the first VR content, and
determines the second non-VR content according to details of the second VR content.

7. The information processing device according to any one of claims 1 to 6, wherein
in a case where the selection means selects a third VR content when the first VR content and the second VR content are displayed side by side on the display means, and
the display control means controls the display means so as to display in the second region the third VR content in place of the second VR content .

8. The information processing device according to any one of claims 1 to 7, wherein in the first case, in a case where the VR space is viewed in a vertical direction, an angle formed by a straight line connecting a center of the first region and a position of the user and a straight line connecting a center of the second region and the position of the user is smaller than 180 degrees.

9. The information processing device according to any one of claims 1 to 8, wherein in the VR space in the first case, a non-display region in which a VR content is not displayed is placed between the first region and the second region.

10. The information processing device according to claim 9, wherein in a case where the VR space is viewed in a vertical direction, an angle formed by a straight line connecting one end of the non-display region and a position of the user and a straight line connecting another end of the non-display region and the position of the user is 8 degrees or more.

11. The information processing device according to any one of claims 1 to 8, wherein in the VR space in the first case, a superimposed region in which the first region and the second region overlap each other is formed.

12. The information processing device according to claim 11, wherein in the first case, the display control means determines which of a part of the first VR content and a part of the second VR content is to be displayed in the superimposed region in response to an operation from the user.

13. A control method of an information processing device, comprising:
a selection step of selecting at least two VR contents from a plurality of VR contents in response to an operation from a user; and
a display control step of controlling display means so as to display an image of a VR space in which the at least two VR contents selected in the selection step are arranged side by side, wherein
in a first case where a first VR content and a second VR content are selected in the selection step, in the display control step, the display means is controlled so as to display an image of the VR space in which a first region for displaying the first VR content and a second region for displaying the second VR content are arranged side by side.

14. A computer program comprising instructions which, when the program is executed by a computer, cause the computer to carry out function of each means of the information processing device according to any one of claims 1 to 12.

15. A computer readable medium storing a computer program comprising instructions which, when the program is executed by a computer, cause the computer to carry out function of each means of the information processing device according to any one of claims 1 to 12.
